# FASCICULE DE BREVET EUROPEEN

(11) **EP 2 065 122 B1**
(45) Date de publication et mention de la délivrance du brevet: **04.01.2012**
(21) Numéro de dépôt: 08291077.9
(22) Date de dépôt: 17.11.2008
(51) Int. Cl.: B23P 19/00, B65G 47/14

(54) **Procédé d'assemblage de boutons poussoirs par positionnement des corps dans le chemin de convoyage**
Montageverfahren von Druckknöpfen zur Positionierung von Körpern auf einem Förderweg
Method of assembling pushbuttons by positioning the bodies in the conveyor path

(30) Priorité: 30.11.2007 FR 0708409
(43) Date de publication de la demande: 03.06.2009
(73) Titulaire: Rexam Dispensing Systems, 76470 Le Treport (FR)
(72) Inventeur: Lompech, Hervé, 80220 Ansennes Bouttencourt (FR); Octou, Jean-Luc, 76630 Intraville (FR); Chretien, Phillippe, 76260 Eu (FR); Herbette, Jean-Luc, 80310 Belloy sur Somme (FR)
(74) Mandataire: Sayettat, Julien Christian

(56) Documents cités:
- GB-A- 1 259 969
- US-A- 3 024 523
- US-A- 3 198 399
- US-A- 3 258 106
- US-A- 3 523 316
- US-A- 3 708 854
- US-A- 4 049 389
- US-A- 4 177 548
- US-A- 5 036 569
- US-A- 5 191 960

## Description

L'invention concerne un procédé d'assemblage de boutons poussoirs pour un système de distribution d'un liquide, une installation pour la mise en oeuvre de ce procédé, ainsi qu'un bouton poussoir assemblé par la mise en oeuvre dudit procédé.

Dans une application particulière, le système de distribution est destiné à équiper des flacons utilisés en parfumerie, en cosmétique ou pour des traitements pharmaceutiques. En effet, ce type de flacon contient un liquide qui est restitué par un système de distribution comprenant une pompe ou une valve à actionnement manuel, ledit système étant actionné par un bouton poussoir pour permettre la pulvérisation du liquide.

De tels boutons poussoirs sont classiquement réalisés en deux ou trois parties : un corps d'actionnement, une buse de pulvérisation du liquide et éventuellement un enjoliveur recouvrant ledit corps, lesdites parties étant assemblées entre elles pour former le bouton poussoir. Après assemblage, les boutons poussoirs sont installés sur les systèmes de distribution par emmanchement sur un gicleur faisant office de conduit de sortie du contenu des flacons.

Pour réaliser l'assemblage de la buse et éventuellement de l'enjoliveur sur le corps, il convient de positionner de façon précise ledit corps par rapport aux outils d'assemblage. En particulier, la buse est classiquement destinée à être emmanchée dans un logement du corps, et l'orientation dudit logement par rapport au contour de la buse doit donc être assurée pour pouvoir enfoncer automatiquement ladite buse dans ledit logement.

Le document US-5 191 960 décrit un système de fourniture automatique d'éléments de fixation tels que des vis filetées et des écrous à un dispositif d'utilisation desdits éléments tel qu'une presse.

Avec les procédés d'assemblage selon l'art antérieur, le positionnement des corps est réalisé individuellement, notamment en engageant dans ledit corps une contre-forme de son profil intérieur. Ensuite, la buse est enfoncée dans le logement et, éventuellement, l'enjoliveur est associé au dessus dudit corps en laissant libre l'orifice de sortie de la buse. L'assemblage peut également être réalisé dans l'ordre inverse. Toutefois, ce type de procédé nécessite l'arrêt du convoyage pour positionner le corps, ce qui limite les cadences à environ deux assemblages par seconde.

L'invention a pour but de perfectionner l'art antérieur en proposant en particulier un procédé d'assemblage de boutons poussoirs dans lequel les cadences d'assemblage peuvent être augmentées, notamment jusqu'à cinq boutons poussoirs par seconde.

A cet effet, et selon un premier aspect, l'invention propose un procédé d'assemblage de boutons poussoirs pour un système de distribution d'un liquide, dans lequel chaque bouton poussoir comprend un corps d'actionnement et au moins un autre composant assemblé audit corps dans une position déterminée, ledit procédé prévoyant d'utiliser des corps sur lesquels une empreinte de positionnement est formée, et d'alimenter en continu un poste d'assemblage des corps et des autres éléments par l'intermédiaire d'un chemin de convoyage desdits corps, ledit chemin présentant un profil complémentaire destiné à venir coopérer avec les empreintes pour réaliser le positionnement desdits corps dans ledit chemin de convoyage, de sorte à réaliser l'assemblage des autres composants sur les corps ainsi positionnés lors de leur convoyage jusqu'au poste d'assemblage.

Selon un deuxième aspect, l'invention propose une installation pour la mise en oeuvre d'un tel procédé d'assemblage, ladite installation comprenant une réserve de corps, un poste d'assemblage et un chemin de convoyage entre ladite réserve et ledit poste, dans laquelle le chemin de convoyage présente un profil complémentaire qui est destiné à venir coopérer avec les empreintes pour réaliser le positionnement desdits corps dans ledit chemin lors de leur convoyage jusqu'au poste d'assemblage.

Selon un troisième aspect, l'invention propose un bouton poussoir assemblé par mise en oeuvre d'un tel procédé, ledit bouton poussoir comprenant un corps muni d'une empreinte de positionnement, ledit bouton poussoir comprenant en outre une buse et/ou un enjoliveur assemblé sur ledit corps.

D'autres objets et avantages de l'invention apparaîtront dans la description qui suit, faite en référence aux figures annexées dans lesquelles :
- la figure 1 est une vue en coupe longitudinale d'un bouton poussoir selon un mode de réalisation de l'invention, ledit bouton poussoir étant monté sur une pompe équipant un flacon ;
- la figure 2 est une vue en coupe longitudinale selon la ligne AA de la figure 1 ;
- les figures 3 sont des vues en perspective du bouton poussoir selon la figure 1, respectivement avant assemblage de la buse (figure 3a) et après ledit assemblage (figure 3b) ;
- la figure 4 est une représentation schématique d'une installation d'assemblage de boutons poussoirs selon la figure 1 ;
- les figures 5 sont des vues partielles en coupe transversale de respectivement la rampe (figure 5a) et la goulotte (figure 5b) de l'installation selon la figure 4, un bouton poussoir positionné étant représenté sur ces figures.

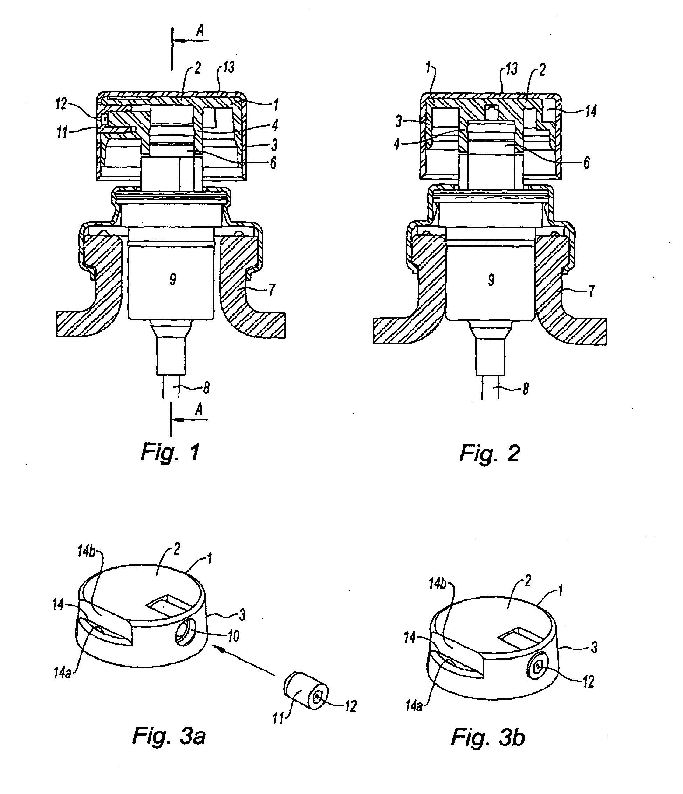

En relation avec les figures 1 à 3, on décrit ci-dessous un bouton poussoir de pulvérisation pour un système de distribution d'un liquide, ledit liquide pouvant être de toute nature, notamment utilisé en parfumerie, en cosmétique ou pour des traitements pharmaceutiques.

Le bouton poussoir comprend un corps d'actionnement 1 dans lequel un chemin de distribution est formé. Le corps 1 présente une paroi supérieure 2 permettant à l'utilisateur d'exercer sur elle un appui digital afin de pouvoir déplacer axialement ledit bouton poussoir. Le corps 1 présente également, d'une seule pièce, une jupe extérieure 3 et une jupe intérieure 4, lesdites jupes s'étendent sous la paroi supérieure 2 avec ladite jupe intérieure entourée par ladite jupe extérieure. La jupe intérieure 4 délimite un logement 5 de montage du bouton poussoir sur le système de distribution, ledit logement étant en communication avec le chemin de distribution.

Sur les figures, le système de distribution présente un gicleur 6 qui est inséré de façon étanche dans le logement 5. De façon connue, le système de distribution comprend par ailleurs des moyens de montage sur le col 7 d'un flacon contenant le liquide et des moyens de prélèvement 8 du liquide à l'intérieur dudit flacon qui sont agencés pour alimenter le gicleur 6 en liquide sous pression.

Pour ce faire, le système de distribution comprend une pompe 9 à actionnement manuel ou, dans le cas où le liquide est conditionné sous pression dans le flacon, une valve à actionnement manuel. Ainsi, lors d'un déplacement manuel du bouton poussoir, la pompe 9 ou la valve est actionnée pour alimenter le gicleur 6 en liquide sous pression

Le corps 1 présente également un logement annulaire 10 d'axe perpendiculaire à celui du logement de montage 5, l'extrémité aval du chemin de distribution débouchant dans ledit logement.

Le bouton poussoir comprend également une buse de pulvérisation 11 qui est assemblée audit corps 1 en étant montée dans le logement 10 (figures 3). Dans les modes de réalisation représentés, la buse 11 comprenant un corps cylindrique dans lequel un orifice de distribution 12 est formé, ladite buse étant disposée colinéairement à l'axe du logement 10 pour permettre une pulvérisation latérale du liquide relativement au corps 1 du bouton poussoir.

Par ailleurs, le bouton poussoir comprend un enjoliveur d'aspect 13 qui est monté sur le corps d'actionnement 1, en recouvrant la paroi supérieure 2 et la face extérieure de la jupe extérieure 3 tout en laissant libre l'orifice de distribution 12.

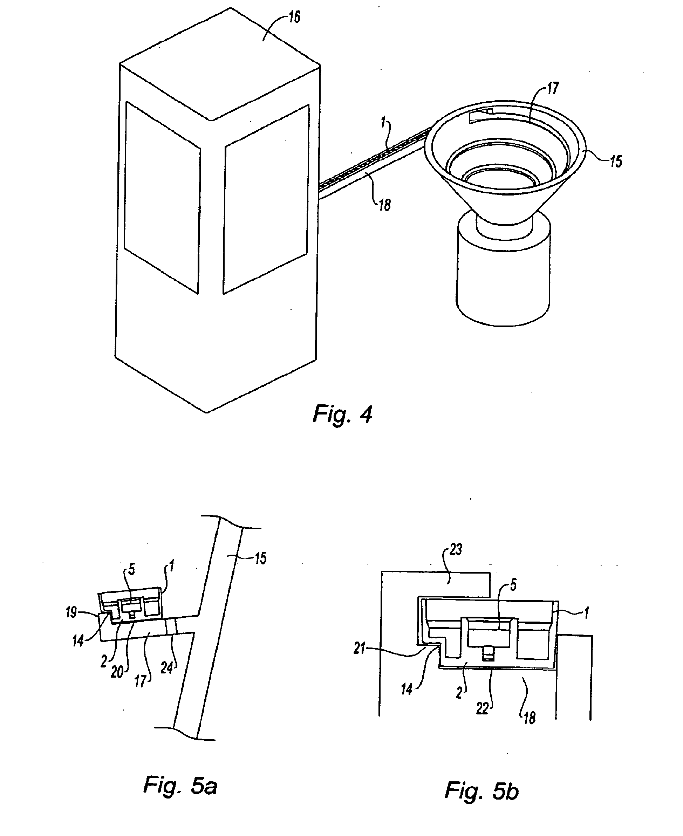

En relation avec les figures 4 et 5, on décrit ci-dessous une installation et un procédé d'assemblage de tels boutons poussoirs comprenant un corps d'actionnement 1, une buse de pulvérisation 11 et un enjoliveur 13. En variante, le bouton poussoir peut comprendre un seul de ces composants assemblés au corps 1, ou plus généralement au moins un composant à assembler audit corps dans une position déterminée.

Le procédé prévoit d'utiliser des corps d'actionnement 1 sur lesquels une empreinte de positionnement est formée. Sur les figures, l'empreinte est formée d'une encoche 14 prévue sur la paroi supérieure 2 du corps 1, ladite encoche débouchant sur ladite paroi. Plus précisément, l'encoche 14 présente une surface radiale plane 14a reliée à une surface axiale plane 14b, lesdites surfaces étant formées dans la jupe extérieure 3 par exemple lors du moulage du corps 1.

En outre, dans le mode de réalisation représenté, l'encoche 14 s'étend parallèlement à l'axe du logement 10 de montage de la buse 11. En variante, l'encoche 14 peut être formée pour s'étendre perpendiculairement à cet axe ou en toute autre position. Ces réalisations permettent une indexation simple du logement 10 de la buse 11 par rapport aux outils permettant l'enfoncement de ladite buse dans ledit logement.

Sur la figure 4, l'installation d'assemblage des boutons poussoirs comprend une réserve de corps qui est formée d'un bol vibrant 15, ledit bol étant représenté vide sur la figure. L'installation comprend également un poste d'assemblage 16 et un chemin de convoyage des corps 1 entre ledit bol et ledit poste. Le procédé prévoit ainsi d'alimenter en continu le poste d'assemblage 16 des boutons poussoirs par l'intermédiaire dudit chemin de convoyage, notamment en disposant les corps 1 dans ledit chemin par vibration du bol 15.

Pour permettre le positionnement des corps 1 au moyen des encoches 14, le chemin de convoyage présente un profil complémentaire qui est destiné à venir coopérer avec lesdites encoches. Ainsi, le positionnement des corps 1 est réalisé dans le chemin de convoyage de sorte à pouvoir réaliser l'assemblage des autres composants sur les corps 1 qui ont été positionnés lors de leur convoyage jusqu'au poste d'assemblage 16.

En particulier, le procédé d'assemblage ne nécessite donc pas d'arrêter le convoyage des corps 1 pour leur positionnement, celui-ci étant réalisé dans le chemin de convoyage, ce qui permet d'augmenter notablement les cadences d'assemblage. Ensuite, l'assemblage peut être réalisé dans le poste d'assemblage 16, notamment l'enfoncement de la buse 11 dans le logement 10 suivie de l'emmanchement de l'enjoliveur 13 sur le corps 1, ledit enjoliveur masquant en outre l'encoche 14 de positionnement.

Dans le mode de réalisation décrit, la coopération est réalisée par engagement de l'encoche 14 dans un rail s'étendant le long du chemin de convoyage. En particulier, le rail est réalisé fixement dans le chemin de convoyage de sorte à ne pas utiliser d'organes mobiles pour réaliser le positionnement.

En relation avec les figures 4 et 5, la périphérie intérieure du bol vibrant 15 comprend une rampe 17 de convoyage qui est formée en hélice, l'extrémité supérieure de ladite rampe communicant avec une goulotte 18 pour former le chemin de convoyage. Plus précisément, la rampe 17 présente un bord extérieur saillant 19 par rapport à son fond 20, ledit bord présentant une dimension adaptée pour former le profil complémentaire dans lequel les encoches 14 peuvent s'engager. En particulier, la hauteur du bord 19 correspond sensiblement à celle de l'encoche 14 de sorte à pouvoir disposer le corps 1 dans la rampe 17 avec la paroi supérieure 3 en regard du fond 20 et l'encoche 14 en appui sur le bord 19 (figure 5a).

Par ailleurs, une marche latérale 21 est formée le long de la goulotte 18, ladite marche présentant une dimension analogue à celle du bord 19 de sorte à former un profil complémentaire dans la continuité dudit bord. Dans cette réalisation, le profil complémentaire consiste donc en un rail de positionnement et de guidage des corps 1 dans le chemin de convoyage. En outre, le fond 22 de la goulotte 18 présente une largeur analogue à l'encombrement de la paroi supérieure 2 qui est disposée en regard lorsque l'encoche 14 est engagée dans la marche 21 (figure 5b). Par ailleurs, la goulotte 18 comprend un toit 23 disposé au dessus de la marche 21 avec une hauteur agencée pour maintenir les encoches 14 dans ladite marche lors du convoyage des corps 1 dans ladite goulotte.

Ainsi, les corps 1 contenus dans le bol 15 sont disposés sur la rampe 17 par vibration. Ensuite, les vibrations facilitent l'orientation du corps 1 dans la bonne position représentée sur la figure 5a. Toujours sous l'effet des vibrations, les corps 1 se déplacent les uns derrière les autres dans la rampe 17 pour atteindre la goulotte 18 en bonne position, ladite position étant ensuite conservée lors du convoyage dans ladite goulotte jusqu'au poste d'assemblage 16.

Le procédé d'assemblage prévoit en outre d'expulser du chemin de convoyage les corps 1 en mal position, notamment en appliquant un effort sur une partie du corps 1 qui est saillante du chemin de convoyage lorsque ledit corps est en mal position. En particulier, l'expulsion peut être réalisée sur la rampe 17, c'est-à-dire préalablement à l'entrée de la goulotte 18.

Pour ce faire, le fond 20 présente un orifice 24 qui est positionné à une distance du bord 19 qui est, d'une part inférieure au diamètre des corps 1 et, d'autre part supérieure à l'encombrement dudit corps lorsque l'encoche 14 est engagée dans ledit bord. L'orifice 24 est en communication avec un moyen d'application d'un effort, notamment d'un jet d'air (non représenté) qui permet, dans le cas où l'encoche 14 n'est pas engagée sur le bord 19, de soulever ledit corps puisqu'une partie de celui-ci vient en regard de l'orifice 24. En outre, la rampe 17 est inclinée vers l'intérieur du bol 15 afin de faciliter l'expulsion par basculement du corps 1 soulevé, et permettre le retour dudit corps dans ledit bol pour son convoyage ultérieur.

## Revendications

1. Procédé d'assemblage de boutons poussoirs pour un système de distribution d'un liquide, dans lequel chaque bouton poussoir comprend un corps d'actionnement (1) et au moins un autre composant (11, 13) assemblé audit corps dans une position déterminée, ledit procédé étant **caractérisé en ce qu'**il prévoit d'utiliser des corps (1) sur lesquels une empreinte (14) de positionnement est formée, et d'alimenter en continu un poste d'assemblage (16) des corps (1) et des autres composants (11, 13) par l'intermédiaire d'un chemin de convoyage desdits corps, ledit chemin présentant un profil complémentaire (19, 21) destiné à venir coopérer avec les empreintes (14) pour réaliser le positionnement desdits corps dans ledit chemin de convoyage, de sorte à réaliser l'assemblage des autres composants (11, 13) sur les corps (1) ainsi positionnés lors de leur convoyage jusqu'au poste d'assemblage (10).

2. Procédé d'assemblage selon la revendication 1, **caractérisé en ce qu'**il prévoit la coopération par engagement d'une encoche (14) prévue sur la paroi supérieure (2) du corps (1) dans un rail (19, 21) s'étendant le long du chemin de convoyage.

3. Procédé d'assemblage selon la revendication 1 ou 2, **caractérisé en ce que** les corps (1) sont disposés dans le chemin de convoyage par vibration.

4. Procédé d'assemblage selon l'une quelconque des revendications 1 à 3, **caractérisé en ce qu'**il prévoit d'expulser du chemin de convoyage les corps (1) qui sont mal positionnés.

5. Procédé d'assemblage selon la revendication 4, **caractérisé en ce que** l'expulsion est réalisée par application d'un effort sur une partie du corps (1) qui est saillante du chemin de convoyage lorsque ledit corps est en mal position.

6. Installation pour la mise en oeuvre du procédé d'assemblage selon la revendication 1, ladite installation étant **caractérisée en ce qu'**elle comprend une réserve (15) de corps (1), un poste d'assemblage (16) et un chemin de convoyage entre ladite réserve et ledit poste, dans laquelle le chemin de convoyage présente un profil complémentaire (19, 21) qui est destiné à venir coopérer avec les empreintes (14) pour réaliser le positionnement desdits corps dans ledit chemin lors de leur convoyage jusqu'au poste d'assemblage (16).

7. Installation selon la revendication 6, **caractérisée en ce que** la réserve comprend un bol vibrant (16) sur la périphérie intérieure duquel une rampe (17) de convoyage est formée, ladite rampe communicant avec une goulotte (18) pour former le chemin de convoyage pourvu du profil complémentaire (19, 21).

8. Installation selon la revendication 7, **caractérisée en ce que** la rampe (17) présente un bord extérieur saillant (19) par rapport à son fond (20), ledit bord formant le profil complémentaire.

9. Installation selon la revendication 8, **caractérisée en ce que** le fond (20) présente un orifice (24) qui est positionné à une distance du bord (19) qui est, d'une part inférieure au diamètre des corps (1) et, d'autre part supérieure à l'encombrement dudit corps lorsque l'empreinte (14) est engagée dans ledit bord, ledit orifice étant en communication avec un moyen d'application d'un effort. -

10. Installation selon l'une quelconque des revendications 7 à 9, **caractérisée en ce que** la rampe (17) est inclinée vers l'intérieur du bol (15).

11. Installation selon l'une quelconque des revendications 8 à 10, **caractérisée en ce qu'**une marche latérale (21) est formée le long de la goulotte (18), ladite marche formant profil complémentaire dans la continuité du bord (19) de la rampe (17).

12. Installation selon la revendication 11, **caractérisée en ce que** la goulotte (18) comprend un toit (23) disposé au dessus de la marche (21) avec une hauteur agencée pour maintenir les empreintes (14) dans ladite marche lors du convoyage des corps (1) dans ladite goulotte.

13. Bouton poussoir assemblé par mise en oeuvre du procédé selon l'une quelconque des revendications 1 à 5, ledit bouton poussoir étant **caractérisé en ce qu'**il comprend un corps (1) muni d'une empreinte (14) de positionnement utilisée lors du procédé d'assemblage, ledit bouton poussoir comprenant en outre une buse (11) et un enjoliveur (13) masquant l'empreinte (14) de positionnement et assemblé sur ledit corps.

14. Bouton poussoir selon la revendication 13, **caractérisé en ce que** l'empreinte est formée d'une encoche (14) débouchant sur la paroi supérieure (2) dudit corps.

15. Bouton poussoir selon la revendication 14, **caractérisé en ce qu'**il comprend une buse (11) assemblée dans un logement (10) du corps (1), l'encoche (14) s'étendant parallèlement ou perpendiculairement à l'axe dudit logement.

## Claims

1. Method of assembling push buttons for a system for dispensing a liquid, wherein each push button comprises an actuating body (1) and at least one other component (11, 13) assembled to said body in a determined position, said method being **characterised in that** it provides to use bodies (1) whereon an impression (14) for positioning is formed, and to continuously supply an assembly station (16) with bodies (1) and other components (11, 13) by the intermediary of a conveyor path of said bodies, said path having a complementary profile (19, 21) intended to cooperate with the impressions (14) in order to carry out the positioning of said bodies in said conveyor path, in such a way as to realise the assembly of the other components (11, 13) on the bodies (1) positioned as such during their conveyance to the assembly station (16).

2. Method of assembling according to claim 1, **characterised in that** it provides for the cooperation by engagement of a notch (14) provided on the upper wall (2) of the body (1) in a rail (19, 21) extending along the conveyor path.

3. Method of assembling according to claim 1 or 2, **characterised in that** the bodies (1) are arranged in the conveyor path via vibration.

4. Method of assembling according to any of claims 1 to 3, **characterised in that** it provides to expulse from the conveyor path the bodies (1) which are incorrectly positioned.

5. Method of assembling according to claim 4, **characterised in that** the expulsion is carried out by application of a force on a portion of the body (1) which is protruding from the conveyor path when said body is incorrectly positioned.

6. Installation for the implementation of the method of assembly according to claim 1, said installation being **characterised in that** it comprises a reserve (15) of bodies (1), an assembly station (16) and a conveyor path between said reserve and said station, wherein the conveyor path has a complementary profile (19, 21) which is intended to cooperate with the impressions (14) in order to carry out the positioning of said bodies in said path during their conveyance to the assembly station (18).

7. Installation according to claim 6, **characterised in that** the reserve comprises a vibratory bowl (16) on the interior periphery from which a conveyance ramp (17) is formed, said ramp communicating with a chute (18) in order to form the conveyor path provided with the complementary profile (19, 21).

8. Installation according to claim 7, **characterised in that** the ramp (17) has a protruding exterior edge (19) in relation to its bottom (20), said edge forming the complementary profile.

9. Installation according to claim 8, **characterised in that** the bottom (20) has an orifice (24) which is positioned at a distance from the edge (19) which is, on the one hand less than the diameter of the bodies (1) and, on the other hand greater than the encumbrance of said body when the impression (14) is engaged in said edge, said orifice being in communication with a means of application of a force.

10. Installation according to any of claims 7 to 9, **characterised in that** the ramp (17) is inclined towards the interior of the bowl (15).

11. Installation according to any of claims 8 to 10, **characterised in that** a lateral step (21) is formed along the chute (18), said step forming a complementary profile in the continuity of the edge (19) of the ramp (17).

12. Installation according to claim 11, **characterised in that** the chute (18) comprises a roof (23) arranged above the step (21) with a height arranged in order to maintain the impressions (14) in said step during the conveyance of the bodies (1) in said chute.

13. Push button assembled by implementation of the method according to any of claims 1 to 5, said push button being **characterised in that** it comprises a body (1) provided with an impression (14) for positioning used during the method of assembly, said push button further comprising a nozzle (11) and a trim (13) masking the impressions (14) for positioning and assembled on said body.

14. Push button according to claim 13, **characterised in that** the impression is formed of a notch (14) exiting onto the upper wall (2) of said body.

15. Push button according to claim 14, **characterised in that** it comprises a nozzle (11) assembled in a housing (10) of the body (1), the notch (14) extending in parallel or perpendicularly to the axis of said housing.

## Patentansprüche

1. Verfahren zur Montage von Druckknöpfen für ein Verteilungssystem einer Flüssigkeit, in dem jeder Druckknopf einen Betätigungskörper (1) umfasst und zumindest eine andere Komponente (11, 13), die an den Körper in einer bestimmten Position montiert ist, wobei das Verfahren **dadurch gekennzeichnet ist, dass** es vorsieht, Körper (1) zu verwenden, auf denen ein Abdruck (14) zum Positionieren gebildet ist, und kontinuierlich einen Montageposten (16) mit den Körpern (1) und den anderen Komponenten (11, 13) über einen Beförderungsweg der Körper zu versorgen, wobei der Weg ein zusätzliches Profil (19, 21) aufweist, das dazu vorgesehen ist, mit den Abdrücken (14) zusammen zu wirken, um das Positionieren der Körper im Beförderungsweg zu realisieren, so dass die Montage der anderen Komponenten (11, 13) auf den derart bei ihrer Beförderung bis zum Montageposten (16) positionierten Körper (1) realisiert wird.

2. Verfahren zur Montage nach Anspruch 1, **dadurch gekennzeichnet, dass** das Zusammenwirken durch Eingreifen in eine Kerbe (14), die auf der oberen Wand (2) des Körpers (1) vorgesehen ist, in eine Schiene (19, 21), die sich am Beförderungsweg entlang erstreckt.

3. Verfahren zur Montage nach Anspruch 1 oder 2, **dadurch gekennzeichnet, dass** die Körper (1) durch Vibrieren in den Beförderungsweg angeordnet werden.

4. Verfahren zur Montage nach einem der Ansprüche 1 bis 3, **dadurch gekennzeichnet, dass** es vorsieht, die Körper (1), die schlecht positioniert sind, aus dem Beförderungsweg auszustoßen.

5. Verfahren zur Montage nach Anspruch 4, **dadurch gekennzeichnet, dass** das Ausstoßen realisiert wird durch die Anwendung einer Kraft auf einen Teil des Körpers (1), der hervorsteht vom Beförderungsweg, wenn der Körper schlecht positioniert ist.

6. Anlage für den Einsatz des Verfahrens zur Montage nach Anspruch 1, wobei die Anlage **dadurch gekennzeichnet ist, dass** sie eine Reserve (15) der Körper (1), einen Montageposten (16) und einen Beförderungsweg zwischen der Reserve und dem Posten umfasst, in der der Beförderungsweg ein zusätzliches Profil (19, 21) aufweist, das dazu vorgesehen ist, mit den Abdrücken (14) zusammen zu wirken, um das Positionieren der Körper im Weg bei deren Beförderung bis zum Montageposten (16) zu realisieren.

7. Anlage nach Anspruch 6, **dadurch gekennzeichnet, dass** die Reserve ein Schwingungsmagazin (16) umfasst, auf dessen innerem Umfang eine Beförderungsrampe (17) gebildet ist, wobei die Rampe mit einer Rinne (18) verbunden ist, um den Beförderungsweg mit dem zusätzlichen Profil (19, 21) zu bilden.

8. Anlage nach Anspruch 7, **dadurch gekennzeichnet, dass** die Rampe (17) einen Außenrand (19) aufweist, der im Verhältnis zum Boden (20) vorspringt, wobei der Rand das zusätzliche Profil bildet.

9. Anlage nach Anspruch 8, **dadurch gekennzeichnet, dass** der Boden (20) eine Öffnung (24) aufweist, die mit einem Abstand zum Rand (19) positioniert ist, der einerseits kleiner als der Durchmesser der Körper (1) und andererseits größer als die Hauptabmessungen des Körpers ist wenn der Abdruck (14) in den Rand eingeführt ist, wobei die Öffnung in Verbindung mit einem Mittel zur Anwendung einer Kraft ist.

10. Anlage nach einem der Ansprüche 7 bis 9, **dadurch gekennzeichnet, dass** die Rampe (17) schräg zum Inneren des Magazins (15) neigt.

11. Anlage nach einem der Ansprüche 8 bis 10, **dadurch gekennzeichnet, dass** eine Seitenstufe (21) an der Rinne (18) entlang gebildet ist, wobei die Stufe das zusätzliche Profil in der Kontinuität des Randes (19) der Rampe (17) bildet.

12. Anlage nach Anspruch 11, **dadurch gekennzeichnet, dass** die Rinne (18) ein Dach (23) umfasst, das über der Stufe (21) mit einer Höhe angebracht ist, um die Abdrücke (14) in der Stufe bei der Beförderung der Körper (1) in der Rinne zu halten.

13. Druckknopf, montiert durch den Einsatz des Verfahrens nach einem der Ansprüche 1 bis 5, wobei der Druckknopf **dadurch gekennzeichnet ist, dass** er einen Körper (1) umfasst, der mit einem Abdruck (14) zum Positionieren versehen ist, der beim Montageverfahren zur Montage verwendet wird, wobei der Druckknopf des Weiteren eine Düse (11) umfasst, und eine Zierkappe (13), die den Abdruck (14) zum Positionieren bedeckt und auf dem Körper montiert ist.

14. Druckknopf nach Anspruch 13, **dadurch gekennzeichnet, dass** der Abdruck durch eine Kerbe (14) gebildet wird, die an der oberen Wand (2) des Körpers endet.

15. Druckknopf nach Anspruch 14, **dadurch gekennzeichnet, dass** er eine Düse (11) umfasst, die in einer Lagerung (10) des Körpers (1) montiert ist, wobei sich die Kerbe (14) parallel oder im rechten Winkel zur Achse der Lagerung erstreckt.
